# EUROPEAN PATENT SPECIFICATION

(11) **EP 2 772 444 B1**
(45) Date of publication and mention of the grant of the patent: **04.11.2015**
(21) Application number: 13185090.1
(22) Date of filing: 19.09.2013
(51) Int. Cl.: B65B 35/50, B65B 41/04, B65B 41/06, B65B 43/12, B65B 61/20, B65H 5/10, B65G 57/00, B65H 29/10, B65H 15/00, B65H 3/08

(54) **A device for positioning separating layers and a machine for loading palettes including such a device**
Vorrichtung zur Positionierung von Trennschichten und Maschine zum Beladen von Paletten mit einer solchen Vorrichtung
Dispositif de positionnement de couches de séparation et machine pour charger des palettes avec un tel dispositif

(30) Priority: 28.02.2013 IT MO20130052
(43) Date of publication of application: 03.09.2014
(73) Proprietor: Liedl, Charlotte Anna Maria, 39011 Lana (Bolzano) (IT)
(72) Inventor: Liedl, Charlotte Anna Maria, 39011 Lana (Bolzano) (IT)
(74) Representative: Casadei, Giovanni

(56) References cited:
- US-A- 5 445 053
- US-A- 6 152 681
- US-A1- 2011 076 128

## Description

The present invention relates to a device for positioning interlayers.

The device in question is particularly useful in a pallet packaging process comprising various layers of items.

A very common process for packaging pallets envisages arranging a pile of items on a bench, for example containers, crates or the like, organised in overlapping layers. The arrangement of the various layers of items takes place using a machine of the known art which, substantially, places various layers of previously composed items on top of each other. The pile of items is then wrapped with an extensible film and/or with a series of straps.

Very often, especially in cases in which the items to be piled have irregular shapes and/or are not particularly stiff, and in cases in which there are numerous layers to be overlapped and the pallet reaches a certain height, the pile may be unstable and dangerous situations can arise and, in any case, it may cause problems in the subsequent pallet moving and packaging stages. The instability of the pile forces very long acceleration and deceleration ramps to be used, which substantially lengthens the movement stages along the line. The pile of items further tends to diverge upwards, making the wrapping operations with extensible film and/or straps problematic. At the end of the packaging process, the pallet may also have a diverging shape upwards with a consequent increase in dimensions, especially at the top of the pallet itself.

In order to make the pile of items that form the pallet more stable, it is of remarkable help to place cardboard, paper or plastic interlayers between the various layers of items.

Currently these cardboard interlayers are placed in between the various layers by means of devices located to the side of the pallet packaging line. This leads to an increase in the overall dimensions of the packaging line, since the presence of the devices for positioning the cardboard interlayers substantially increases the plan dimensions of the line. The increase in plan dimensions of the line may be even more problematic in the event of factories with various packaging lines alongside each other, since the devices for positioning the interlayers reduce the width of the aisles between the lines.

US2011/0076128 discloses a palletizing system including a sheet placement machine for depositing a slip sheet on top of a pallet. The sheet placement machine includes a sheet placement member with suction cups for releasably holding a sheet. The sheet placement member is secured to a chain carried by a gear wheel arrangement. When the chains are mounted on the gear wheel arrangement the chains have a generally triangular configuration. The sheet placement member being secured to the chains is movable between a sheet receiving position and a sheet placement position. Another example of a prior art device is known from document US5445053.

The aim of the present invention is to provide a device for positioning interlayers which enables the above-described drawbacks of known-type devices to be obviated.

An advantage of the device for positioning interlayers according to the present invention is that it does not increase the dimensions of the packaging line.

Another advantage of the device according to the present invention is that it is simple and reliable.

A further advantage of the device according to the present invention is that it can be positioned in an area of easy access along the pallet packaging line.

Further characteristics and advantages of the present invention will become clear from the following detailed description of an embodiment of the invention in question, illustrated by way of non-limiting example in the attached figures wherein:

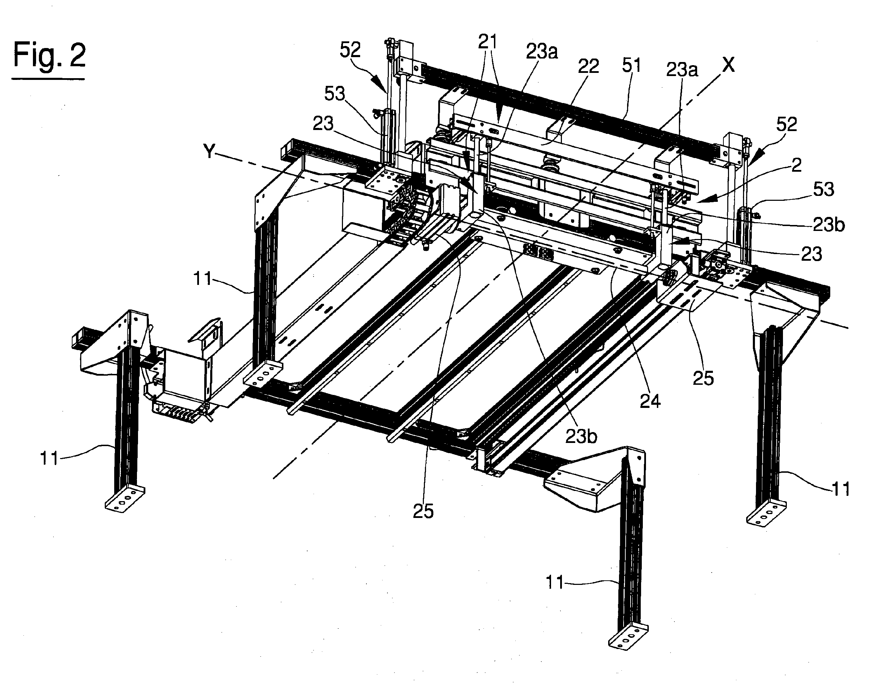

- Figures 1 and 2 show two axonometric views of the device according to the present invention;
- Figure 3 shows an axonometric view of a line for packaging pallets with which the device according to the present invention is associated;
- Figures 4 to 8 show subsequent stages of the operation of the device according to the present invention.

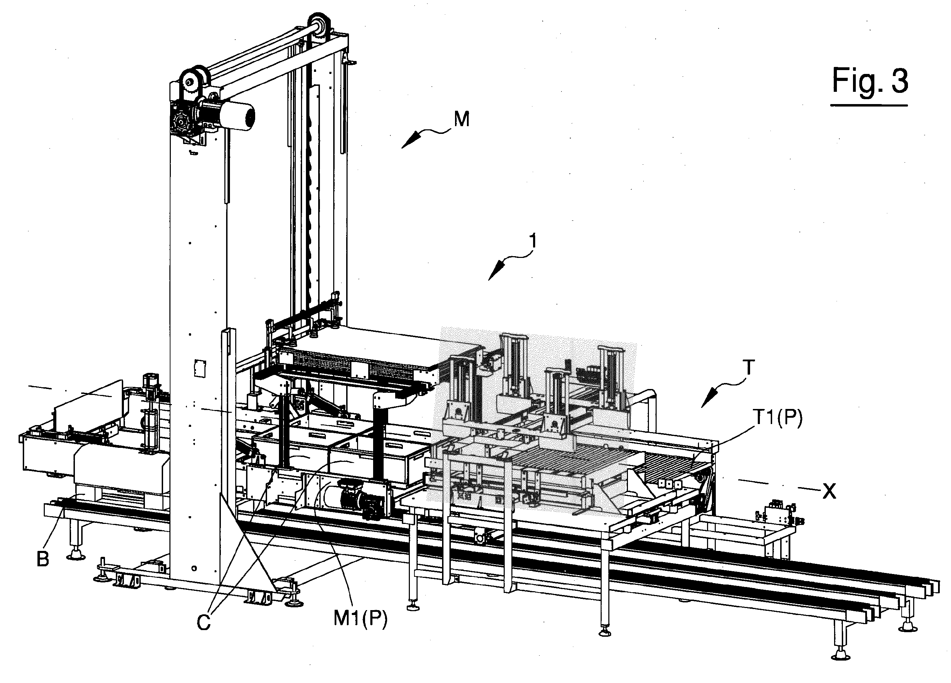

The device for the positioning of interlayers according to the present invention is particularly useful and effective in a line for packaging pallets, illustrated schematically in Figure 3, which comprises a compacting device (T) predisposed to organise a group of items (C), for example containers or articles, according to a prefixed plan distribution layout which depends on the size and shape of the items (C) themselves. This compacting device is illustrated in an axonometric view not in detail, since it is known to a person skilled in the art.

Downstream of the compacting device (T) a palletising device or manipulator (M) is located, equipped with the possibility of translating vertically and horizontally. The manipulator device (M) substantially picks up a group of items (C) organised and compacted by the compactor device (T) and, through a carriage (M1), lifts and lowers it until a determined height, greater than that of the last group of items (C) deposited on the bench, horizontally translates until the group of items (C) is above the pile of items (C) already partially formed, releases the group of items (C) and returns to the initial position. The palletiser or manipulator device (M) is known to a person skilled in the art, therefore will not be described and illustrated in detail.

The groups of items (C) are mobile along a transport plane (P) structured to move the groups themselves along a horizontal transport direction (X) from an initial zone to an end zone of the line. Such a transport plane (P) can be defined, at least partially, also by a zone of the compactor device (T), or can be defined at least partially by a zone or by a mobile part of the palletiser or manipulator device (M), or by both. For example, in the line illustrated in Figure 3, the groups of items (C) translate from one work plane (T1) of the compactor device (T) to a mobile carriage (M1) of the palletiser device (M) along the transport direction (X). It should be understood that the transport plane (P) could also have a different structure and conformation, in the event that a device according to the present invention is used in different lines or machinery from the described line for the packaging of pallets.

Downstream of the end zone of the transport plane (P), in a pallet formation zone, a bench (B) is positioned intended to progressively receive the various groups of items (C) that will form the pallet. Once the packaging is finished, the pallet is evacuated and a new bench (B) is positioned in the pallet formation zone.

The device (1) for positioning interlayers according to the present invention comprises a support frame (10), predisposed to be located above a transport plane (P). The transport plane (P) has been represented in an exemplary and general way, since it can assume a different conformation according to the line or machinery in which the device (1) is used according to the present invention.

The support frame (10) comprises four feet (11) through which it can be associated with the transport plane (P). The support frame (10) further comprises a support plane (12) intended to support a pack of interlayers (L) above the transport plane (P). In the preferred, but not exclusive, use of the device (1) according to the present invention, the support frame (10) is located above the carriage (M1) of the palletiser device (M), in a position in which the carriage (M1) receives a group of items (C) coming from the compactor device (T) (Figure 3).

The device for positioning interlayers according to the present invention comprises gripping means (2), predisposed to grasp an interlayer (L) at an end or edge zone of the interlayer (L) itself.

The gripping means (2) are mobile between a first position, at which they can grasp an interlayer (L) on an upper lying plane (G1), and a second position, at which they can release the interlayer (L) onto a lower lying plane (G2). The upper lying plane (G1) is substantially above the support plane (12). The lower lying plane (G2) is below the upper lying plane (G1) and above the transport plane (P).

In order to move between the first and the second position, the gripping means (2) are mobile in rotation about a horizontal axis of rotation (Y) and in translation along a horizontal direction of transport (X) perpendicular to the axis of rotation (Y).

In particular, to move from the first to the second position, the gripping means (2) are predisposed to make a rotation of a determined amplitude, preferably 180°, about their own horizontal axis of rotation (Y) and a subsequent translation along the direction of transport (X). To return from the second position to the first position, the gripping means (2) perform the same movements in the opposite sequence and direction.

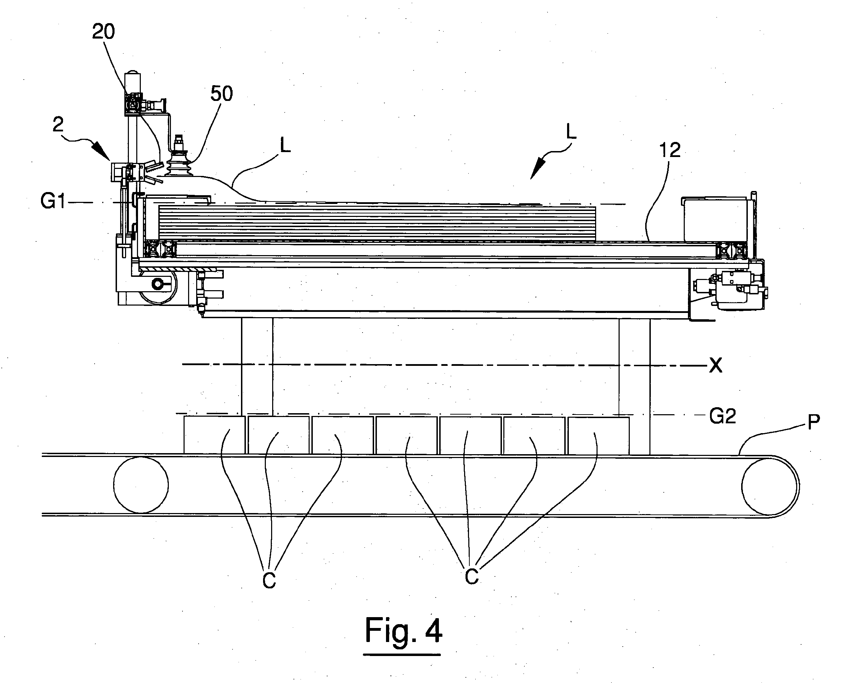

As shown in Figures 3 to 7, an interlayer (L), grasped by the gripping means (2) that move from the first to the second position, therefore completes a path that substantially develops in a U shape, turning itself upside down about the horizontal axis of rotation (Y) and sliding along the direction of transport (X). In particular, the interlayer (L) slides due to the gripping means (2) along the lower lying plane (G2) and above the items (C) themselves. Preferably, in the sliding stretch along the direction of transport (X), the gripping means (2) move in the opposite direction with respect to the transport plane (P). In this way the interlayer (L) moves to meet the items (C). The portion of the interlayer (L) withheld by the gripping means (2) remains above the items (C), while the remaining portion of the interlayer (L), which tends to rest on the transport plane (P), is progressively lifted by the items (C) and deposits itself above the items (C) themselves. When the gripping means (2) reach the second position, in accordance with a time synchronisation cycle to be described more fully below, the interlayer (L) is released and fully deposited above the group of items (C) below.

The gripping means (2) comprise at least one gripper (20) predisposed to assume a closing configuration, at which it can grip and hold an interlayer (L) at an end zone, and an opening configuration, at which it cannot hold an interlayer (L). In particular the gripper (20) comprises a pair of jaws (20a,20b) which are mobile in rotation to each other between an opening position, in which they are spaced out from each other, and a closing position, in which they are alongside each other.

Preferably the gripping means (2) comprise two grippers (20), arranged at a determined distance from each other. The two grippers are aligned along a parallel direction to the axis of rotation (Y), so that the edge zone of the interlayer (F) which is grasped by the grippers (2) remains substantially rectilinear and parallel to the axis of rotation (Y).

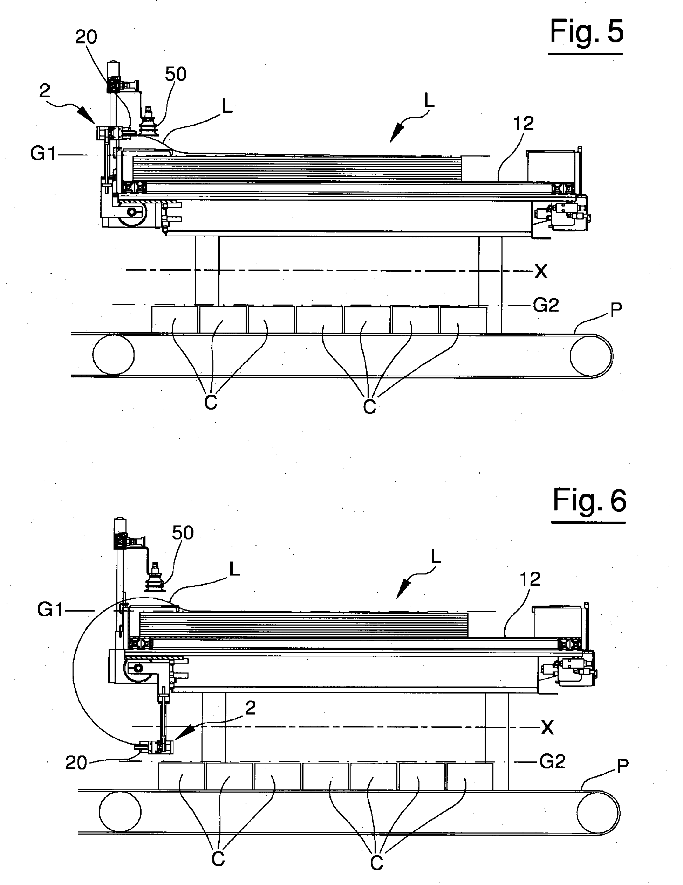

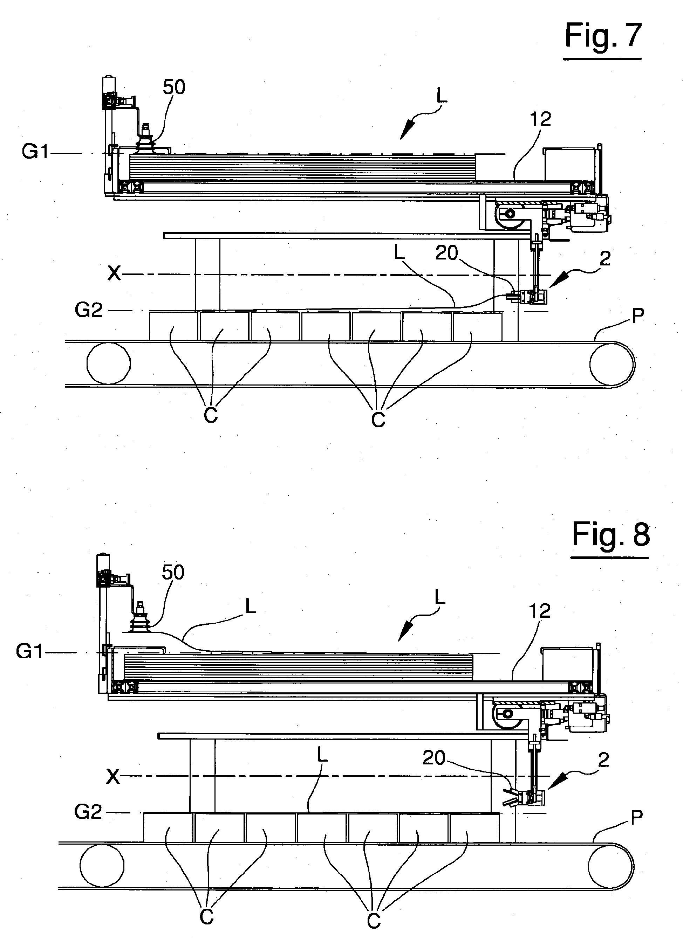

The grippers (20) are associated with a support element (21) which is rotatable about a horizontal axis of rotation (Y) through an angle of about 180°. The support element (21) is further slidable along the horizontal direction of transport (X) perpendicular to the horizontal axis of rotation (Y). Preferably, in the first position of the gripping means (2) the grippers (20) are turned towards the direction from which the items come (C). In the second position of the gripping means (2), the grippers (20) are actually facing the opposite way, that is, with their free ends turning towards the direction of advancement of the items (C), as can be seen in Figures 6 and 7. In this way, during the sliding movement of the gripping means (2) towards the second position which, as has already been mentioned, takes place in the opposite direction to the advancement of the items (C), the interlayer (L) tends to remain flat.

The support element (21) comprises a crosspiece (22), substantially parallel to the axis of rotation (Y), and a pair of L-shaped arms (23) which, at a first end, are associated with the crosspiece (22). At an opposite end, the L-shaped arms (23) are rigidly constrained to a shaft (24), concentric to the axis of rotation (Y) which, at its own ends, is rotatably constrained to a pair of cursors (25). Such cursors (25) are slidable with respect to the support frame (10) in a parallel direction to the direction of transport (X). The sliding of the cursors (25) can be obtained in various ways, for example, by means of an articulated chain or a linear actuator.

The movement of the gripping means (2) from the first to the second position therefore takes place through a rotation of the L-shaped arms (23), and of the gripper or the grippers (20) associated with them through the crosspiece (22), about the axis of rotation (Y), which is followed by a sliding of the cursors (25), and therefore the L-shaped arms (23), the crosspiece (22) and the grippers (20) associated with the cursors themselves, in a parallel direction to the direction of transport (X).

The crosspiece (22) is mobile moving away from and towards the axis of rotation (Y), in order to allow the adjustment of the distance between the grippers (20) and the axis of rotation (Y). For that purpose, the L-shaped arms (23) have an extendable portion (23a), comprising a stem and a cylindrical or prismatic guide, which is slidable perpendicular to the axis of rotation (Y) by actuators, for example, a pair of pneumatic cylinders (23b).

The device according to the present invention further comprises secondary gripping means (5), predisposed to position an interlayer (L) so that it can be gripped by the gripping means (2) in the first position.

These secondary gripping means (5) comprise one or more suckers (50) predisposed to adhere to an interlayer (L). The suckers (50) are further predisposed to move between a first position, in which they can adhere to an interlayer (L) arranged in a storage position, and a second position, in which the interlayer (L) can be grasped by the gripping means (2).

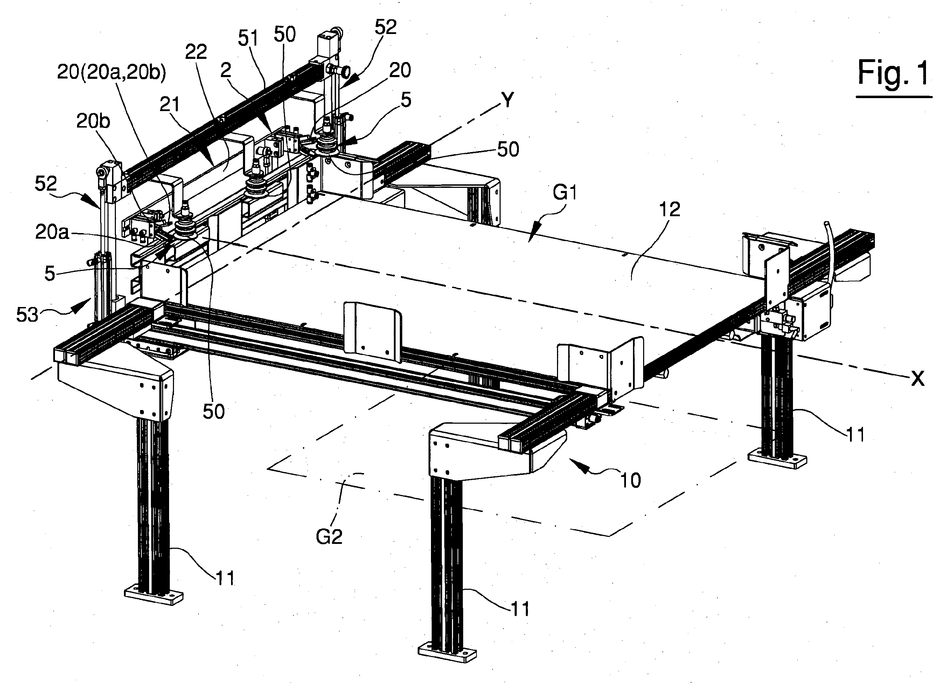

As can be seen in Figure 1 and in Figures 3 to 7, the suckers (50) are located above the support plane (12) and above the pack of interlayers (L) resting on the plane (12) itself. The suckers (50) are vertically mobile between a lower position, in which, following a command, they can adhere to the top interlayer (L) of the pack. From the lower position the suckers (50) can rise vertically towards an upper position, at which the held interlayer (L) can be grasped by the gripping means (2). In particular, in the upper position of the suckers (50), the edge portion of the interlayer (L) is arranged so that the jaws (20a,20b) of the grippers (2) can overlap with the edge portion itself.

The suckers (50) are associated with a support bar (51) which is associated with the frame (10) slidably along a vertical direction by means of prismatic or cylindrical guides (52). Actuator means (53), in the form of pneumatic cylinders for example, are predisposed to translate the support bar (51) vertically.

The operation of the device takes place in the following ways.

Consider an initial moment in which the gripping means (2) are in the first position, an interlayer (L) is clasped between the grippers (20) and the suckers (50) have released the interlayer (L) which, consequently, is supported at an edge portion only by the grippers (20).

When a group of items (C), transiting along the direction of transport (X) on the transport plane (P), reaches a determined position, which can be detected using a sensor of the known art, the gripping means (2) begin to move from the first position towards the second position. Alternatively, it is also possible that the gripping means (2) move from the first to the second position at the same time as the advancement of the items (C), or, it is even possible for the gripping means to reach the second position and, later, for the items (C) to be made to advance.

The grippers (20) rotate downwards about the axis of rotation (Y) of an angle equal to about 180°, bringing themselves above the transport plane (P). Subsequently the grippers (20) are activated slidably in a parallel direction to the direction of transport (X), remaining above the transport plane (P), towards the second position, in the opposite direction to the advancement of the items (C). The portion of the interlayer (L) which is not supported by the grippers (20) rests on the items (C) and slides on them until the gripping means (2) reach the second position. In the second position of the gripping means (2), the interlayer (L) is substantially centred on the group of items (C) below. At this point the grippers (20) release the interlayer (L) which rests completely on the group of items (C) below. The group of items (C), covered by the interlayer (L), can therefore be sent to the subsequent pallet composition stages, in which a subsequent group of products (C), in turn covered by an interlayer (L), is overlapped with the interlayer (L) of the previous group of items (C).

Subsequently the gripping means (2) complete the inverse path from the second towards the first position, while the secondary gripping means (5), by means of the suckers (50), grasp and lift the edge portion of a new interlayer (L). The grippers (20), after sliding along the direction of transport (X) and remaining in the open configuration, rotate upwards coming back into the initial position, hence overlapping with the edge portion of the new interlayer (L) which, in the meantime, has already been lifted by the suckers (50). In this configuration the device is ready for the positioning of the new interlayer (L).

The device for positioning interlayers according to the present invention offers important advantages.

Above all, thanks to the movements completed by the gripping means (2), it can be positioned above the transport plane (P) of a line for packaging pallets, remaining substantially within the plan dimensions of the frame or support plane supporting the interlayers (L) and within the plan dimensions of the transport plane (P). In this, the dimensions of the packaging line remain substantially the same. Furthermore, the position in which the device can be located is easier for the operators to access, facilitating the refilling of interlayers (L) as well any maintenance operations that may be required.

The device is further extremely effective and fast, therefore it does not increase the amount of time required for packaging the pallets.

## Claims

1. A device for positioning layers, comprising: gripping means (2), predisposed to grip a layer (L) at an end zone of the layer (L) itself, which are mobile between a first position, at which they can grip a layer (L) on an upper lying plane (G1), and a second position, at which they can release the layer (L) onto a lower lying plane (G2), wherein the gripping means (2) are mobile between the first and the second position in rotation about a horizontal axis of rotation (Y) and in translation along a horizontal direction of transport (X) perpendicular to the axis of rotation (Y); wherein said gripping means (2) are associated with a support element (21) which is rotatable about the horizontal axis of rotation (Y) through an angle of about 180° and is slidable along the direction of transport (X), wherein said support element (21) comprises a crosspiece (22), to which the gripping means (2) are associated, which is mobile moving away from and towards the axis of rotation (Y) in order to allow the adjustment of a distance between the gripping means (2) and the axis of rotation (Y), wherein the gripping means (2) comprise at least one gripper (20) predisposed to assume a closing configuration, at which it can grip and hold a layer (L) at an end zone, and an opening configuration, at which it cannot hold a layer (L).

2. The device according to claim 1, wherein, to move from the first to the second position, the gripping means (2) are predisposed to make a rotation of a determined amplitude about their own horizontal axis of rotation (Y) and a subsequent translation along the direction of transport (X).

3. The device according to claim 1, wherein the gripping means (2) comprise two grippers (20), arranged at a determined distance from each other.

4. The device according to claim 1, comprising secondary gripping means (5), predisposed to position a layer (L) so that it can be gripped by the gripping means (2) in the first position.

5. The device according to claim 4, wherein the secondary gripping means (5) comprise one or more suckers (50), predisposed to adhere to a layer (L), which are predisposed to be moved between a first position, in which they can adhere to a layer (L) arranged in a storage position, and a second position in which the layer (L) can be gripped by the gripping means (2).

6. The device according to claim 5, wherein the suckers (50) are vertically mobile between a lower position, in which, following a command, they can adhere to a layer (L), and an upper position, at which the layer (L) held can be gripped by the gripping means (2).

7. A packaging line for pallets, comprising: a device predisposed to organise a group of items (C) according to a prefixed plan distribution diagram; a transport plane (P) structured so as to move the groups of items (C) along a horizontal direction of transport (X); a manipulator device (M) predisposed to pick up a group of items (C) from the transport plane (P) and to position the group of items (C) above a pile formed by other groups of items (C) previously positioned; a device (1) for positioning layers (L) according to any of the preceding claims, located above the transport plane (P) upstream of the manipulator device (M).

## Patentansprüche

1. Vorrichtung zum Positionieren von Schichten, umfassend: Greifmittel (2), ausgelegt, um eine Schicht (L) an einer Endzone der Schicht (L) zu greifen, die zwischen einer ersten Position, in der sie eine Schicht (L) auf einer oberen liegenden Ebene (G1) greifen können, und einer zweiten Position, in der sie die Schicht (L) auf einer unteren liegenden Ebene (G2) freigeben, beweglich sind, wobei die Greifmittel (2) zwischen der ersten und zweiten Position, sich drehend um eine horizontale Rotationsachse (Y) und verfahrend entlang einer horizontalen Transportrichtung (X), die senkrecht zur Rotationsachse (Y) verläuft, beweglich sind, wobei die Greifmittel (2) mit einem Stützelement (21) assoziiert sind, das um die horizontale Rotationsachse (Y) über einen Winkel von zirka 180° drehbar und entlang der Transportrichtung (X) verfahrbar ist, wobei das Stützelement (21) ein Kreuzstück (22) umfasst, mit dem die Greifmittel (2) assoziiert sind, das wegführend von und hinführend zur Rotationsachse (Y) beweglich ist, um die Justierung eines Abstands zwischen den Greifmitteln (2) und der Rotationsachse (Y) zu erlauben, wobei die Greifmittel (2) mindestens einen Greifer (20) umfassen, der ausgelegt ist, um eine Schließkonfiguration einzunehmen, in der er eine Schicht (L) an einer Endzone greifen und halten kann, und eine Öffnungskonfiguration, in der er eine Schicht (L) nicht halten kann.

2. Vorrichtung nach Anspruch 1, wobei die Greifmittel (2) ausgelegt sind, um eine Drehung einer vorgegebenen Amplitude um ihre eigene horizontale Rotationsachse (Y) und eine darauffolgende Verfahrung entlang der Transportrichtung (X) auszuführen, um sich von der ersten zur zweiten Position zu bewegen.

3. Vorrichtung nach Anspruch 1, wobei die Greifmittel (2) zwei Greifer (20) umfassen, die in einem vorgegebenen Abstand voneinander angeordnet sind.

4. Vorrichtung nach Anspruch 1, umfassend Hilfsgreifmittel (5), die ausgelegt sind, um eine Schicht (L) zu positionieren, sodass diese von den Greifmitteln (2) in der ersten Position gegriffen werden kann.

5. Vorrichtung nach Anspruch 4, wobei die Hilfsgreifmittel (5) einen oder mehrere Sauger (50) umfassen, die ausgelegt sind, um an einer Schicht (L) zu haften, die ausgelegt sind, um zwischen einer ersten Position, in der sie an einer Schicht (L) haften können, die in einer Lagerungsposition angeordnet ist, und einer zweiten Position, in der die Schicht (L) von den Greifmitteln (2) gegriffen werden kann, bewegt zu werden.

6. Vorrichtung nach Anspruch 5, wobei die Sauger (50) vertikal zwischen einer unteren Position, in der sich nach einem Befehl an einer Schicht (L) haften können, und einer oberen Position, in der die gehaltene Schicht (L) von den Greifmitteln (2) gegriffen werden kann, beweglich sind.

7. Verpackungsanlage für Paletten, umfassend: eine Vorrichtung, die ausgelegt ist, um eine Gruppe von Artikeln (C) nach einem vorgegebenen Planverteilungsdiagramm zu organisieren; eine Transportebene (P), die ausgebildet ist, um die Artikelgruppen (C) entlang einer horizontalen Transportrichtung (X) zu bewegen; eine Handhabungsvorrichtung (M), die ausgelegt ist, um eine Artikelgruppe (C) von der Transportebene (P) aufzunehmen und die Artikelgruppe (C) auf einem durch andere, zuvor positionierte Artikelgruppen (C) gebildeten Stapel zu positionieren; eine Vorrichtung (1) zum Positionieren von Schichten (L) nach einem der vorhergehenden Ansprüche, befindlich über der Transportebene (P) vor der Handhabungsvorrichtung (M).

## Revendications

1. Dispositif de positionnement de couches, comprenant: des moyens de préhension (2), prédisposés pour saisir une couche (L) au niveau d'une zone d'extrémité de la couche (L) elle-même, étant mobiles entre une première position, dans laquelle ils peuvent saisir une couche (L) sur un plan d'appui supérieur (G1), et une seconde position, dans laquelle ils peuvent relâcher la couche (L) sur un plan d'appui inférieur (G2), dans lequel les moyens de préhension (2) sont mobiles entre la première et la seconde position en rotation, autour d'un axe horizontal de rotation (Y) et en translation le long d'une direction horizontale de transport (X) perpendiculaire à l'axe de rotation (Y); dans lequel lesdits moyens de préhension (2) sont associés à un élément de support (21) pouvant tourner autour de l'axe horizontal de rotation (Y) selon un angle d'environ 180° et pouvant coulisser le long de la direction de transport (X), dans lequel ledit élément de support (21) comprend une traverse (22), à laquelle les éléments de préhension (2) sont associés, étant mobile en s'éloignant et en se rapprochant de l'axe de rotation (Y) afin de permettre le réglage d'une distance entre les moyens de préhension (2) et l'axe de rotation (Y), dans lequel les moyens de préhensions (2) comprennent au moins un préhenseur (20) prédisposé pour adopter une configuration de fermeture, dans laquelle il peut saisir et tenir une couche (L) au niveau d'une zone d'extrémité, et une configuration d'ouverture, dans laquelle il ne peut pas tenir une couche (L).

2. Dispositif selon la revendication 1, dans lequel, pour se déplacer de la première à la seconde position, les moyens de préhension (2) sont prédisposés pour réaliser une rotation d'une amplitude déterminée autour de leur propre axe horizontal de rotation (Y) ainsi qu'une translation subséquente le long de la direction de transport (X).

3. Dispositif selon la revendication 1, dans lequel les moyens de préhension (2) comprennent deux préhenseurs (20) disposés à une distance prédéterminée l'un de l'autre.

4. Dispositif selon la revendication 1, comprenant des moyens de préhension secondaires (5), prédisposés pour positionner une couche (L) de manière à ce qu'elle puisse être saisie par les moyens de préhension (2) dans la première position.

5. Dispositif selon la revendication 4, dans lequel les moyens de préhension secondaires (5) comprennent une ou plusieurs ventouses (50), prédisposées pour adhérer à une couche (L), qui sont prédisposées pour être déplacées entre une première position, dans laquelle elles peuvent adhérer à une couche (L) disposée dans une position de stockage, et une seconde position dans laquelle la couche (L) peut être saisie par les moyens de préhension (2).

6. Dispositif selon la revendication 5, dans lequel les ventouses (50) sont mobiles verticalement entre une position inférieure, dans laquelle, en fonction d'un ordre donné, elles peuvent adhérer à une couche (L), et une position supérieure, dans laquelle la couche (L) tenue peut être saisie par les moyens de préhension (2).

7. Ligne d'emballage de palettes, comprenant : un dispositif prédisposé pour organiser un groupe d'articles (C) selon un diagramme de distribution sur plan prédéfini; un plan de transport (P) structuré de sorte à déplacer les groupes d'articles (C) le long d'une direction de transport horizontale (X); un manipulateur (M) prédisposé pour saisir un groupe d'articles (C) du plan de transport (P) et pour positionner le groupe d'articles (C) au-dessus d'une pile formée par d'autres groupes d'articles (C) positionnés antérieurement; un dispositif (1) de positionnement des couches (L) selon l'une quelconque des revendications précédentes, situé au-dessus du plan de transport (P) en amont du manipulateur (M).
